# FASCICULE DE BREVET EUROPEEN

(11) **EP 4 146 421 B1**
(45) Date de publication et mention de la délivrance du brevet: **03.07.2024**
(21) Numéro de dépôt: 21724262.7
(22) Date de dépôt: 06.05.2021
(51) Int. Cl.: B23B 29/02, F16F 7/10, F16F 7/104

(54) **BARRE D'ALESAGE MUNIE D'ACTIONNEURS ELECTRODYNAMIQUES POUR CONTRER LES VIBRATIONS ET MACHINE-OUTIL MUNIE D'UNE TELLE BARRE**
BOHRSTANGE MIT ELEKTRODYNAMISCHEN AKTUATOREN ZUR SCHWINGUNGSKOMPENSATION UND MIT EINER SOLCHEN STANGE AUSGESTATTETE WERKZEUGMASCHINE
BORING BAR WITH ELECTRODYNAMIC ACTUATORS FOR COUNTERACTING VIBRATIONS AND MACHINE TOOL PROVIDED WITH SUCH A BAR

(30) Priorité: 07.05.2020 FR 2004538
(43) Date de publication de la demande: 15.03.2023
(73) Titulaire: HUTCHINSON, 75008 Paris (FR)
(72) Inventeur: NOE, Mathieu, 91610 BALLANCOURT (FR)
(74) Mandataire: Gevers & Orès
(86) Numéro de dépôt international: PCT/EP2021/061965
(87) Numéro de publication internationale: WO 2021/224378

(56) Documents cités:
- EP-A1- 0 585 400
- CN-A- 107 989 958
- CN-A- 108 927 538
- JP-A- 2007 111 619
- US-A- 5 558 477
- US-A- 6 009 985
- US-A1- 2004 240 955

## Description

### Domaine technique de l'invention

La présente invention se rapporte au domaine des barres d'alésage ainsi qu'à celui des machines-outils comportant une telle barre.

CN 107 989 958 A montre une barre d'alesage selon le préambule de la première revendication.

### Arrière-plan technique

Afin d'usiner une pièce, une machine-outil utilise souvent une barre d'alésage (plus connue sous le nom de « boring bar » dans la terminologie anglo-saxonne) pour réaliser un alésage dans une pièce à usiner.

En utilisation, la barre d'alésage est amenée à se déplacer le long de son axe longitudinal pour usiner la pièce. La barre d'alésage est uniquement maintenue en porte-à-faux à la machine-outil par l'une de ses extrémités, l'autre de ses extrémités, destinée à être mise en contact avec la pièce à usiner, formant une extrémité libre. Lors de l'usinage d'une pièce, l'extrémité libre de la barre d'alésage en contact avec la pièce à usiner, oscille dans le plan perpendiculaire à son axe longitudinal.

Pour éviter ou du moins limiter ces vibrations, néfastes pour la qualité et la stabilité de l'usinage, il existe déjà de nombreuses solutions, passives ou actives.

Parmi les solutions passives, on trouve le batteur dynamique, lequel consiste en une solution de type masse-ressort dont la fréquence propre est accordée à la fréquence de résonance du mode de flexion de la barre d'alésage et ce afin de contrer les vibrations de l'extrémité libre de la barre d'alésage. On trouve également des solutions consistant à mettre une masse flottante dans un fluide visqueux et ce, afin d'amortir les mouvements de l'extrémité libre de la barre d'alésage.

Les solutions actives consistent quant à elles à prévoir des capteurs (par exemple des accéléromètres), pour mesurer les vibrations subies par la barre d'alésage, les capteurs étant associés à des actionneurs et une unité de traitement de données et de commande (processeur) recevant, en entrée, les données des capteurs et émettant, en sortie, des commandes pour les actionneurs.

Les actionneurs permettent alors de contrer les vibrations subies par la barre d'alésage sur la base des données mesurées par les capteurs.

L'approche active permet notamment d'élargir le spectre de fréquences de vibrations du mode de flexion de la barre d'alésage qui peuvent être contrées.

Différents types d'actionneurs sont employés pour mettre en oeuvre les solutions actives.

Très souvent, l'actionneur est un actionneur piézoélectrique auquel est associé une masse mobile. Le déplacement de la masse mobile, à la fréquence adéquate, permet alors de contrer les vibrations subies par l'extrémité libre de la barre d'alésage. On pourra par exemple se référer au document US 5,558,477.

Les actionneurs piézoélectriques ne permettent cependant pas de générer des déplacements de la masse mobile très importants (le taux de déformation maximal d'une céramique piézoélectrique ne dépasse généralement pas 0.1 %) et ne peuvent générer des contre-vibrations suffisantes pour amortir celles de l'extrémité libre de la barre d'alésage que lorsque la barre d'alésage vibre à des fréquences relativement élevées, ce qui est typiquement le cas des barres de plus faible diamètre, également plus courtes. En effet, l'effort F généré par une masse mobile est proportionnel au produit de sa masse M par l'accélération A qu'elle subit (Newton). Pour une masse mobile donnée, par exemple type poutre vibrante de longueur donnée, encastrée donc d'un côté et libre de l'autre, l'accélération A subie correspond au produit de son déplacement d (de son côté libre) sous l'effet du piézoélectrique, par la pulsation au carré, ω². Et cette pulsation est direction proportionnelle à la fréquence f, selon la relation ω = 2.π.f. Ainsi, si la barre vibre à une fréquence relativement élevée, un actionneur piézoélectrique, bien que générant des déplacements limités, peut générer des efforts suffisants pour contrer les vibrations.

Cela est bien plus difficile pour une barre vibrant à des fréquences basses, typiquement une barre longue et de plus grand diamètre.

Bien entendu, pour compenser cela, on peut prévoir des actionneurs piézoélectriques générant des déplacements plus importants, ce qui signifie tout simplement des actionneurs piézoélectriques plus puissants, et en conséquence plus volumineux. Cette solution s'avère en pratique inadaptée pour certaines barres d'alésage, qui définissent un volume interne contraint, sauf à installer à l'extérieur de la barre d'alésage ce qui n'est généralement pas recherché.

Plus récemment, il a été proposé d'employer un actionneur électromagnétique, toujours en association avec une masse mobile. On pourra par exemple se référer au document CN108927538 A.

Dans cette approche, un actionneur comporte quatre électroaimants se répartissant à intervalles réguliers le long de la circonférence intérieure de la barre d'alésage. Les électroaimants peuvent ainsi fonctionner par paires (électroaimants qui sont diamétralement opposés), sous l'effet d'un module de contrôle électronique. permet alors le déplacement de la masse mobile, située radialement interne par rapport aux électroaimants.

On peut ainsi contrôler la direction de déplacement de la masse mobile (type Fer doux), radialement interne par rapport aux électroaimants, selon n'importe quelle direction contenue dans le plan perpendiculaire à l'axe longitudinal de la barre d'alésage.

Par ailleurs, avec un actionneur électromagnétique, il est possible de générer des efforts relativement importants, même dans un espace réduit, par exemple celui défini par le volume interne d'une barre d'alésage. En effet, avec un actionneur électromagnétique, l'effort généré est inversement proportionnel au carré de l'entrefer entre l'électroaimant et la masse mobile. Ainsi, et contrairement à l'actionneur piézoélectrique, il est donc notamment possible de générer des efforts importants, même lorsque la barre d'alésage fonctionne à des fréquences relativement basses.

Toutefois, le comportement non linéaire de ce type d'actionneur requiert un contrôle-commande bien plus délicat à mettre en oeuvre qu'avec un actionneur piézoélectrique.

Cette non linéarité peut certes être modérée en limitant le déplacement possible de la masse mobile pour finalement avoir un comportement quasi linéaire, mais cela se fait alors au détriment de la force susceptible d'être générée par l'actionneur électromagnétique, au risque finalement de voir son comportement à basses fréquences moins bien adapté pour contrer, à de telles basses fréquences, des vibrations de l'extrémité libre de la barre d'alésage.

Au contraire, lorsque l'on accepte pleinement ce comportement non linéaire, il convient alors d'éviter que l'entrefer ne devienne trop faible en fonctionnement, voire nul ce qui est néfaste pour la durée de vie de l'actionneur. Aussi, il est souvent envisagé à la conception un entrefer important (lequel est défini selon la direction radiale de l'actionneur). Ceci limite alors l'applicabilité à des environnements contraints en termes de place, comme c'est le cas du volume interne d'une barre d'alésage. Pour compenser cela, il est possible d'augmenter l'intensité parcourant les différentes bobines puisque l'effort généré est proportionnel à cette intensité au carré, mais cela se fait donc au détriment d'une dépense d'énergie plus importante.

### Résumé de l'invention

Un objectif de l'invention est de proposer une solution ne présentant pas l'un au moins des inconvénients précités.

En particulier, un objectif de l'invention est de pouvoir proposer une barre d'alésage munie d'au moins un actionneur capable de générer des efforts importants, par exemple pour être en mesure de contrer des vibrations à basses fréquences, particulièrement bien adapté à l'environnement contraint d'une barre d'alésage et aisé à contrôler.

A cet effet, l'invention propose une barre d'alésage munie d'une paroi, d'un logement interne et d'un axe longitudinal, ladite barre d'alésage comportant, dans son logement interne : - un premier actionneur électrodynamique comportant des bobinages entourant une masse mobile munie d'au moins un aimant permanent ainsi que, de part et d'autre de la masse mobile, au moins un ressort monté sur la masse mobile, l'ensemble étant agencé pour définir une première direction d'actionnement perpendiculaire à l'axe longitudinal de la barre d'alésage ; - un deuxième actionneur électrodynamique muni de bobinages entourant une masse mobile munie d'au moins un aimant permanent ainsi que, de part et d'autre de la masse mobile, au moins un ressort monté sur la masse mobile, l'ensemble étant agencé pour définir une deuxième direction d'actionnement à la fois perpendiculaire à la première direction d'actionnement et à l'axe longitudinal de la barre d'alésage.

La barre d'alésage selon l'invention pourra comprendre l'une au moins des caractéristiques suivantes, prises seules ou en combinaison :
- le premier actionneur électrodynamique et le deuxième actionneur électrodynamique sont situés l'un à la suite de l'autre le long de l'axe longitudinal de la barre d'alésage ;
- le premier actionneur électrodynamique comprend un premier bobinage et un deuxième bobinage situé en vis-à-vis du premier bobinage, selon une première direction perpendiculaire à l'axe longitudinal de la barre d'alésage, ledit au moins un aimant permanent étant agencé entre deux couches faites d'un matériau magnétique doux ;
- le premier actionneur comprend un troisième bobinage, situé en vis-à-vis du deuxième bobinage selon ladite première direction, et en ce que la masse mobile est munie d'un deuxième aimant permanent agencé entre deux couches faites d'un matériau magnétique doux ;
- le deuxième actionneur électrodynamique comprend un premier bobinage et un deuxième bobinage situé en vis-à-vis du premier bobinage, selon une deuxième direction à la fois perpendiculaire à ladite première direction et à l'axe longitudinal de la barre d'alésage, ledit au moins un aimant permanent étant agencé entre deux couches faites d'un matériau magnétique doux ;
- le deuxième actionneur comprend un troisième bobinage situé en vis-à-vis du deuxième bobinage selon ladite deuxième direction, et en ce que la masse mobile est munie d'un deuxième aimant permanent agencé entre deux couches faites d'un matériau magnétique doux ;
- la masse mobile et donc chaque bobinage présente des dimensions plus importantes selon l'axe longitudinal de la barre d'alésage que dans le plan perpendiculaire audit axe longitudinal ;
- le ou chaque actionneur électrodynamique comprend, de part et d'autre de la masse mobile, une pluralité de ressorts juxtaposés selon la direction d'actionnement de l'actionneur considéré ;
- le ou chaque actionneur comprend des plots insérés dans les ressorts ;
- la paroi comprend, au niveau du ou de chaque actionneur, au moins deux capots amovibles, sensiblement diamétralement opposés, agencés en vis-à-vis de l'un des ressorts montés sur la masse mobile ;
- la paroi est munie d'une pluralité d'orifices s'étendant selon la direction définie par l'axe longitudinal de la barre d'alésage ;
- l'actionneur situé au plus près d'un outil de coupe de la barre d'alésage présente une direction d'actionnement se confondant avec une direction radiale de vibration de l'outil de coupe ;
- la longueur cumulée, définie selon ledit axe longitudinal de la barre d'alésage, du premier actionneur et du deuxième actionneur ne dépasse pas 30% de la longueur totale de la barre d'alésage.

L'invention concerne également une machine-outil comprenant : - une barre d'alésage selon l'invention, ladite barre d'alésage comprenant en outre, dans son logement intérieur, au moins un capteur de vibrations apte à capter les vibrations dans un plan perpendiculaire à l'axe longitudinal de la barre d'alésage, - au moins un processeur configuré pour recevoir les données issues dudit au moins un capteur de vibrations, les traiter et commander le premier actionneur et le deuxième actionneur sur la base des données ainsi traitées.

La barre d'alésage de ladite machine-outil pourra en outre comprendre, dans son logement intérieur : un premier capteur de vibrations configuré et agencé, au sein de la barre d'alésage, pour détecter les vibrations dans ladite première direction ; et un deuxième capteur de vibrations configuré et agencé, au sein de la barre d'alésage, pour détecter les vibrations dans ladite deuxième direction.

### Brève description des figures

D'autres caractéristiques et avantages de l'invention apparaitront au cours de la lecture de la description détaillée qui va suivre pour la compréhension de laquelle on se reportera aux dessins annexés et pour lesquels :
[Fig. 1] La figure 1 représente une barre d'alésage conforme à l'invention en cours d'usinage d'une pièce ;
[Fig. 2] La figure 2 représente la barre d'alésage de la figure 1 avant usinage, au niveau de son extrémité où se situe l'outil de coupe ;
[Fig. 3] La figure 3 est une vue schématique de la barre de la figure 1, prise en coupe au niveau d'actionneurs employés dans ladite barre ;
[Fig. 4] La figure 4 est une vue en coupe longitudinale d'un actionneur électrodynamique employé dans ladite barre ;
[Fig. 5] La figure 5 est une vue en perspective et en coupe de l'actionneur électrodynamique de la figure 4 ;
[Fig. 6] La figure 6 est une vue en perspective de l'actionneur électrodynamique de la figure 4, partiellement monté ;
[Fig. 7] La figure 7 est une vue en perspective et en coupe partielle de l'actionneur électrodynamique de la figure 4 ;
[Fig. 8] La figure 8 représente, sur la vue en coupe de la figure 4, les lignes de champ magnétique au sein de l'actionneur électrodynamique lorsque ce dernier est en fonctionnement ;
[Fig. 9] La figure 9 est une vue en perspective d'un ressort employé dans l'actionneur électrodynamique représenté sur la figure 4, lorsque ce dernier est en fonctionnement ;
[Fig. 10] La figure 10 montre des capteurs employés dans la barre d'alésage selon l'invention ;
[Fig. 11] La figure 11 est un schéma de principe d'un système de contrôle-commande employé dans une machine-outil comprenant la barre d'alésage selon l'invention.

### Description détaillée de l'invention

Dans la description qui suit, X,Y et Z désignent trois axes orthogonaux deux à deux.

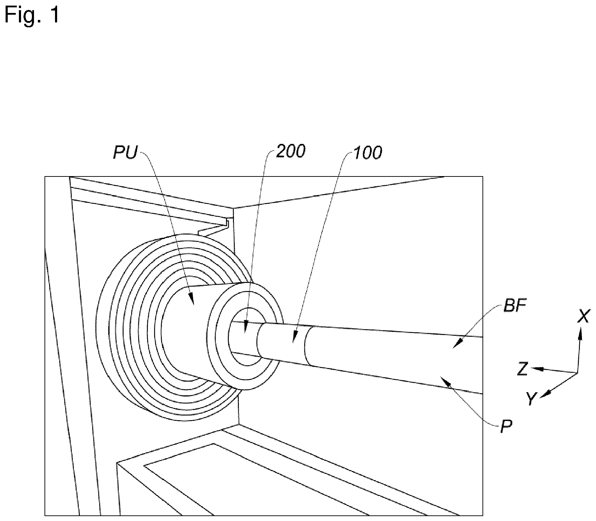

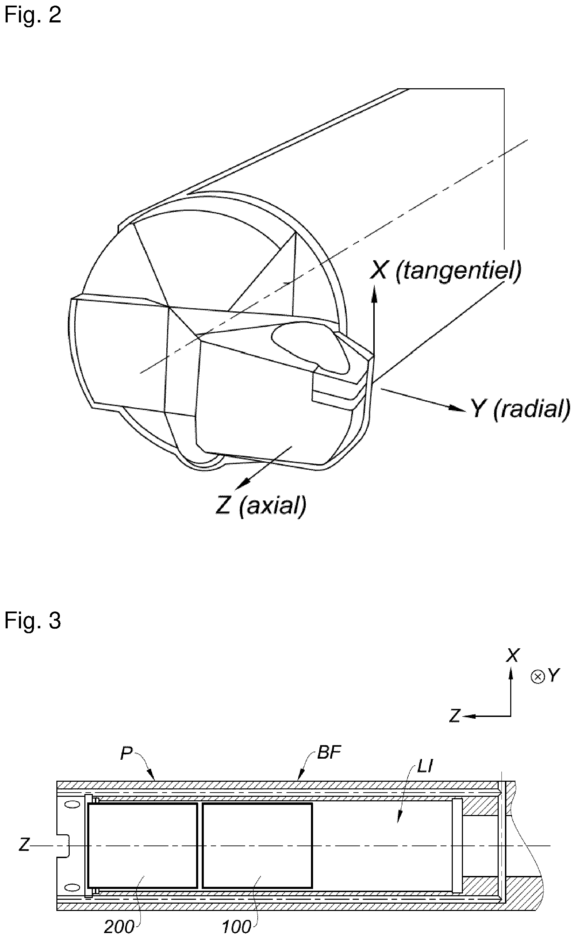

On a représenté sur la figure 1 une barre d'alésage BF en cours d'usinage d'une pièce PU. La barre d'alésage BF est fixe et c'est la pièce usinée PU qui tourne. A l'extrémité libre de la barre d'alésage BF logée dans la pièce usinée PU se trouve un outil de coupe OC visible sur la figure 2 et à la pointe duquel les axes X, Y et Z ont été représentés.

Sur cette barre d'alésage BF, on note la présence de deux actionneurs 100, 200, intégrés à la barre d'alésage BF. On note que le premier actionneur 100 et le deuxième actionneur 200 sont situés l'un à la suite de l'autre le long de l'axe longitudinal Z de la barre d'alésage BF.

La figure 3 schématise quant à elle la barre d'alésage BF de la figure 1 selon une vue en coupe longitudinale.

La barre d'alésage BF est munie d'une paroi P, d'un logement interne LI et d'un axe longitudinal Z.

La barre d'alésage BF comporte, dans son logement interne LI, un premier actionneur 100 électrodynamique muni de bobinages 101, 102 associés à une masse mobile 110 au sein de laquelle il est prévu au moins un aimant permanent de part et d'autre de laquelle est monté au moins un ressort 120, 121. Tous ces composants, à savoir les bobinages 101, 102, la masse mobile 110 et les ressorts 120, 121 sont agencés pour définir une première direction d'actionnement X perpendiculaire à l'axe longitudinal Z de la barre d'alésage BF.

Un actionneur électrodynamique permet de générer des efforts bien plus importants que ceux qui sont susceptibles d'être générés avec un actionneur piézoélectrique, par ailleurs, sans présenter les inconvénients d'un actionneur électromagnétique puisque le comportement d'un actionneur électrodynamique est linéaire (la force de Laplace F = BLI ne dépend que de termes d'ordre 1, avec B, le champ magnétique dans l'entrefer, L la longueur d'un bobinage et I, l'intensité du courant parcourant le bobinage). De plus, la valeur de l'entrefer n'est pas impactée par le déplacement de la masse mobile.

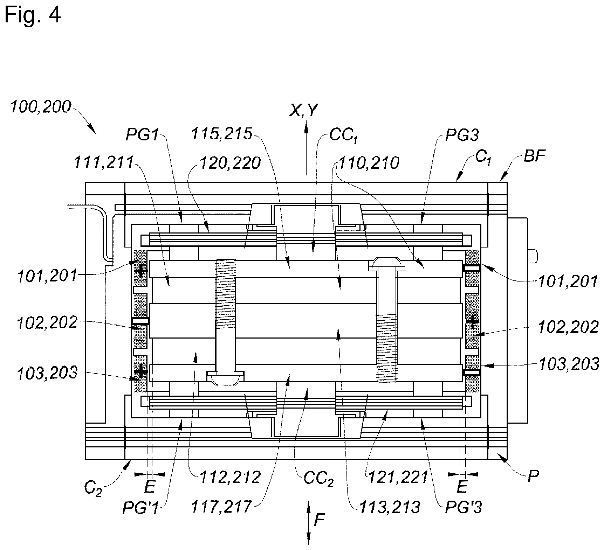

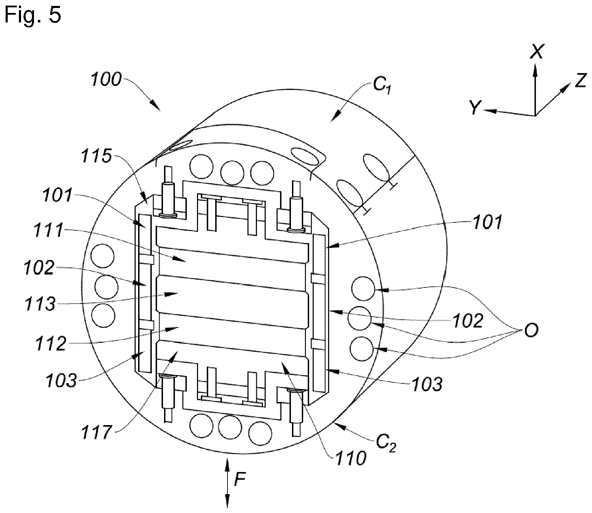

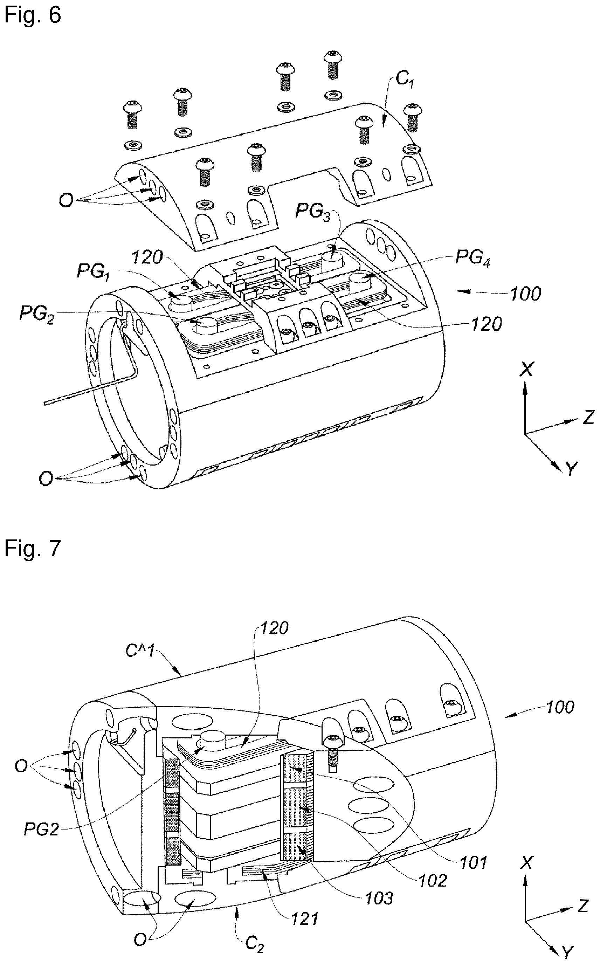

Cet actionneur 100 électrodynamique est décrit plus précisément ci-dessous à l'appui des figures 4 à 7.

Le premier actionneur 100 électrodynamique comprend un premier bobinage 101 et un deuxième bobinage 102 situé en vis-à-vis, selon la première direction X perpendiculaire à l'axe longitudinal Z de la barre d'alésage, du premier bobinage 101.

Le premier actionneur 100 électrodynamique comprend également une masse mobile 110 munie d'au moins un aimant permanent 111 agencé entre deux couches 113, 115 d'un matériau magnétique doux. La masse mobile 110 est par ailleurs entourée par le premier bobinage 101 et par le deuxième bobinage 102 de sorte à définir un entrefer E, entre les bobinages 101, 102 et ledit au moins un aimant permanent 111, défini dans un plan perpendiculaire à ladite première direction X.

Le premier actionneur 100 électrodynamique comprend aussi au moins deux ressorts 120, 121 montées sur la masse mobile 110, chacun desdits au moins deux ressorts étant monté de part et d'autre de la masse mobile 100 selon ladite première direction X. Il est avantageux de prévoir un ressort 120, 121 de part et d'autre de la masse mobile car la masse mobile est amené à se déplacer selon la direction définie par l'axe, mais dans un sens ou dans l'autre selon cet axe.

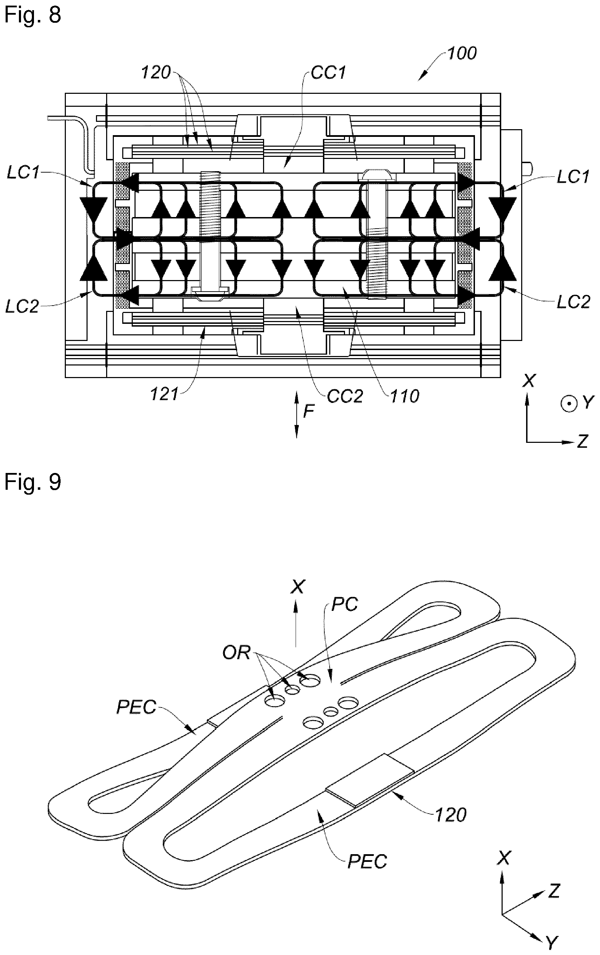

Un ressort 120, 121 peut présenter différents types de forme. Pour autant et avantageusement, il convient que sa forme implique une rigidité plus importante dans les deux directions perpendiculaires à la direction d'actionnement de l'actionneur 100. Cela permet d'assurer un guidage de la masse mobile selon la direction d'actionnement. La figure 9 représente d'ailleurs comment le ressort 120, 121 représenté sur les figures 4 à 7 se déforme, selon la première direction X, lorsqu'il est sollicité par la masse mobile 110. Dans le cas d'espèce, le ressort 120, 121 se présente sous la forme d'une lame plate, et plus particulièrement une lame plate par en forme de « huit aplati » selon la direction Y. Les orifices OR permettent le montage, par boulons ou moyens équivalents appropriés, sur une colonne centrale CC1, CC2 de la masse mobile 110 tandis que les parties externes centrales du ressort 120, 121 sont montées fixes sur une partie fixe de l'actionneur 100 électrodynamique. De ce fait, c'est une partie centrale PC du ressort 120, 121 qui est amenée à se déformer sous l'action de la masse mobile 110.

On comprend que le premier actionneur 100 présente ainsi une direction d'actionnement définie par ladite première direction X le long de laquelle un amortissement des vibrations peut être assuré. La flèche F représente la direction d'actionnement du premier actionneur 100.

Sur la figure 8, on a notamment représenté les lignes de champs LC1 générées par les aimants permanents 111, 112 prévus dans la masse mobile de l'actionneur électrodynamique représenté sur les figues 4 à 7. L'aimant permanent 111 a une aimantation (Nord-Sud) qui est selon la première direction X. Il en est de même pour l'aimant permanent 112, mais dans le sens opposé. Comme on peut le relever sur cette figure 8 (coupe longitudinale dans le plan XZ), la partie de ces lignes de champ passant à travers l'entrefer E est orienté selon la direction Z.

Lorsque l'on fait circuler le courant avec le schéma d'alimentation des bobines 101, 102 fourni sur la figure 4 (également une coupe longitudinale dans le plan XZ), on voit que le courant est orienté selon l'axe Y dans les bobines 101, 102 situées en vis-à-vis et par ailleurs, avec les signes « + » et « - », que le courant est injecté en sens opposés dans les deux bobines 101, 102. Les lignes de champ magnétique étant orientées selon l'axe Z dans l'entrefer E, une force de la place F est alors générée selon la direction X. Un raisonnement similaire pourrait être tenu si l'on raisonnait dans le plan de coupe YZ, avec un champ magnétique alors orienté selon Y dans l'entrefer et un courant circulant selon l'axe Z dans les bobines 101, 102, pour générer une force de Laplace néanmoins toujours orientée selon l'axe X.

Sur la figure 8, l'axe X définit donc la direction d'actionnement de l'actionneur.

La barre d'alésage BF comporte en outre, dans son logement interne LI, un deuxième actionneur 200 électrodynamique muni de bobinages 201, 202 associés à une masse mobile 210 de part et d'autre de laquelle est monté au moins un ressort 220, 221. Tous ces composants, à savoir les bobinages 201, 202, la masse mobile 210 et les ressorts 220, 221 sont agencés pour définir une deuxième direction d'actionnement Y à la fois perpendiculaire à la première direction d'actionnement X et à l'axe longitudinal Z de la barre d'alésage BF.

Le deuxième actionneur 200 électrodynamique est avantageusement identique au premier actionneur 100 électrodynamique. Cependant, le deuxième actionneur 200 électrodynamique est orienté différemment du premier actionneur 100 électrodynamique afin de contrer des vibrations dans la direction Y.

Aussi, la conception représentée sur les figures 4 à 7 décrit aussi le deuxième actionneur 200 électrodynamique. Pour une raison de lisibilité, nous n'avons cependant référencé les différents composants du deuxième actionneur 200 électrodynamique seulement sur la figure 4.

Ainsi, le deuxième actionneur 200 électrodynamique comprend un premier bobinage 201, ainsi qu'un deuxième bobinage 202 situé en vis-à-vis, selon la deuxième direction Y à la fois perpendiculaire à ladite première direction X et à l'axe longitudinal Z de la barre d'alésage, du premier bobinage 201.

Le deuxième actionneur 200 comprend également une masse mobile 210 munie d'au moins un aimant permanent 211 agencé entre deux couches 213, 215 d'un matériau magnétique doux. La masse mobile 210 est entourée par le premier bobinage 201 et par le deuxième bobinage 202 de sorte à définir un entrefer E, entre les bobinages 201, 202 et ledit au moins un aimant permanent 211, défini dans un plan perpendiculaire à ladite deuxième direction Y.

Le deuxième actionneur 200 comprend encore au moins deux ressorts 220, 221 montés sur la masse mobile 210, chacun desdits au moins deux ressorts étant monté de part et d'autre de la masse mobile 210 selon ladite deuxième direction Y. Comme cela a déjà été indiqué précédemment pour le premier actionneur 100, il est avantageux de prévoir un ressort 220, 221 de part et d'autre de la masse mobile car la masse mobile est amené à se déplacer selon la direction définie par l'axe, mais dans un sens ou dans l'autre selon cet axe. Plus généralement, tout ce qui a été dit précédemment sur les propriétés du ressort pour le premier actionneur 100, notamment en regard de la figure 9 est applicable ici.

On comprend donc que le deuxième actionneur 200 présente une direction d'actionnement définie par ladite deuxième direction Y le long de laquelle un amortissement des vibrations peut être assuré. La flèche F représente la direction d'actionnement du deuxième actionneur 100, à savoir ici la deuxième direction Y, qui correspond à la direction de déplacement de la masse mobile 210.

Les commentaires effectués précédemment à l'appui de la figure 8 sont applicables ici.

Des commentaires qui précèdent, on comprend incidemment que chacun des actionneurs 100, 200 est dédié, en fonctionnement, au traitement des vibrations générées par l'extrémité libre EL de la barre d'alésage BF selon une seule direction X ou Y, lesquelles sont orthogonales, ce qui permet finalement de traiter les vibrations dans tout le plan perpendiculaire à l'axe longitudinal Z de la barre d'alésage BF.

De manière avantageuse, le premier actionneur 100 électrodynamique comprend un troisième bobinage 103, situé en vis-à-vis du deuxième bobinage 102 selon ladite première direction X. Par ailleurs, de manière avantageuse, la masse mobile 110 est munie d'un deuxième aimant permanent 112 agencé entre deux couches 113, 117 d'un matériau magnétique doux. Plus précisément, la couche 113 en matériau magnétique doux est en contact avec chaque aimant permanent 111, 112. Il convient de noter que l'actionneur électrodynamique 100 peut tout à fait fonctionner correctement sans troisième bobinage et sans deuxième aimant permanent. Toutefois, le fait de prévoir plusieurs aimants permanents, chacun étant peu épais et entourés de part et d'autre par un matériau magnétique doux permet d'améliorer l'efficacité de l'actionneur électrodynamique. Les lignes de champ générées dans l'actionneur électrodynamique 100, en fonctionnement, avec cette troisième bobine 103 et ce deuxième aimant permanent 112, bobine 103 dans laquelle l'intensité circule dans le même sens que dans la première bobine 101, sont les lignes de champs LC2.

De manière avantageuse également, le deuxième actionneur 200 comprend un troisième bobinage 203 situé en vis-à-vis du deuxième bobinage 202 selon ladite deuxième direction Y. De manière avantageuse, la masse mobile 201 est munie d'un deuxième aimant permanent 212 agencé entre deux couches 213, 217 d'un matériau magnétique doux. Plus précisément, la couche 213 en matériau magnétique doux est en contact avec chaque aimant permanent 211, 212. Les avantages et effets procurés par cette conception ont été décrits ci-dessus.

La masse mobile 110, 210 de chaque actionneur 100, 200 (et en conséquence les bobinages qui l'entourent) présente des dimensions plus importantes selon l'axe longitudinal Z de la barre d'alésage BF que dans le plan XY perpendiculaire audit axe longitudinal Z. En conséquence, c'est également le cas des bobinages 101 à 103 et 201 à 203 dont la longueur L peut donc être augmentée - sans multiplier le nombre de tours autour de de la masse mobile. Cette plus grande dimension longitudinale permet de générer plus d'efforts que si on avait opté pour une dimension longitudinale similaire à la dimension transversale (plan XY). Il convient en effet de rappeler que, pour un actionneur électrodynamique, la force F de Laplace vaut F = BLI où B est le champ magnétique au niveau de l'entrefer E, L la longueur du bobinage et I l'intensité du courant passant dans le bobinage.

L'agencement de l'actionneur électrodynamique 100, 200 permet donc de profiter au mieux de la longueur de la barre d'alésage BF afin, dans l'espace contraint de la barre, d'être en mesure de générer les efforts plus élevés.

D'un point de vue pratique, il reste toutefois avantageux que la longueur cumulée des deux actionneurs 100, 200 reste inférieure ou égale à 30% de la longueur de la barre d'alésage BF. En effet, il est avantageux que les actionneurs 100, 200 soient d'une part situés au niveau de l'extrémité de la barre d'alésage BF destinée à être à proximité de la pièce à usiner PU (lieu où les vibrations sont générées). De ce fait si la longueur cumulée des deux actionneurs 100, 200 est trop importante, alors leur efficacité est moindre.

Par ailleurs, comme on peut le constater sur la figure 2, il est intéressant de placer l'actionneur qui est le plus près de l'outil de coupe OC avec une direction d'actionnement DA se confondant avec la direction radiale de vibration de l'outil de coupe. En effet, en usinage, ce sont principalement les mouvements radiaux de la barre d'alésage BF qui engendrent les défauts d'usinage. Sur les figures annexées, il s'agit de deuxième actionneur 200 (axe Y, direction radiale). Le premier actionneur 100 présente donc une direction d'actionnement se confondant avec la direction tangentielle de vibration de l'outil de coupe OC (axe X). Il est en conséquence plus efficace pour contrer les vibrations de placer l'actionneur dont la direction d'actionnement se confond avec la direction radiale (axe Y) au plus près de la source des vibrations.
que l'actionneur (200) situé au plus près d'un outil de coupe (OC) de la barre d'alésage (BF) présente une direction d'actionnement (DA) se confondant avec une direction radiale de vibration de l'outil de coupe (OC).

Avantageusement, le ou chaque actionneur électrodynamique 100, 200 comprend, de part et d'autre de la masse mobile 110, 210, une pluralité de ressorts juxtaposés selon la direction d'actionnement de l'actionneur considéré. C'est d'ailleurs ce que l'on peut constater sur les figures 4 à 7. Un seul ressort de part et d'autre de la masse mobile 110 peut s'avérer suffisant pour obtenir la rigidité souhaitée. Cependant, un ressort trop épais peut avoir des difficultés à tenir un nombre élevé de cycles (comportement en fatigue). Aussi, il peut être intéressant de diminuer l'épaisseur du ressort 120, 121, cette épaisseur étant définie selon la direction X, pour améliorer le comportement en fatigue. Cela se traduit cependant par un changement de la rigidité du ressort 120, 121 selon cette même direction, ce qui peut en revanche être corrigé par l'emploi de plusieurs ressorts, notamment identiques, juxtaposés selon cette même direction X.

Avantageusement également, le ou chaque actionneur 100, 200 comprend des plots PG1, PG2, PG3, PG4 (PG'1, PG'3) insérés dans les ressorts. Ces plots ont pour fonction d'apporter une raideur additionnelle aux ressorts dans la direction d'actionnement de l'actionneur considéré. Cette raideur additionnelle présente un intérêt pour assurer, pour certaines barres d'alésage, que la fréquence propre de l'actionneur 100, 200 corresponde à la fréquence fondamentale de la barre d'alésage.

Ces plots peuvent aussi apporter une aide aux ressorts, pour améliorer, le cas échéant, le guidage fourni par les ressorts dans la direction d'actionnement et ce en prévoyant des plots plus rigides dans les directions perpendiculaires à la direction d'actionnement de la masse mobile.

On notera que la paroi P de la barre d'alésage BF comprend avantageusement, au niveau du ou de chaque actionneur 100, 200, au moins deux capots amovibles C1, C2, sensiblement diamétralement opposés, agencés en vis-à-vis de l'un des ressorts montés sur la masse mobile 101, 201. La présence de ces capots C1, C2, permet d'installer, changer ou assurer un réglage des ressorts 120, 121, 220, 221.

On relève aussi que la paroi P de la barre d'alésage BF est munie d'une pluralité d'orifices O s'étendant selon la direction définie par l'axe longitudinal Z de ladite barre d'alésage. Ces orifices permettent notamment de faire passer différents câbles, par exemple les câbles assurant l'alimentation électrique de chaque actionneur électrodynamique 100, 200.

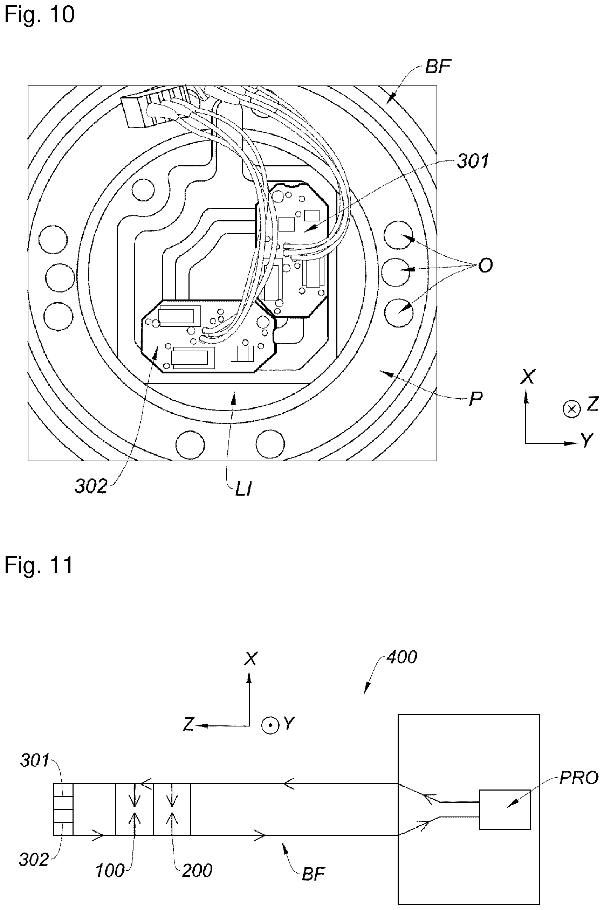

Comme on peut le constater sur la figure 10, la barre d'alésage BF pourra en outre comprendre, dans son logement intérieur LI, au moins un capteur de vibrations 301 configuré et agencé, au sein de la barre d'alésage BF, pour détecter les vibrations dans le plan XY.

A cet effet, on peut prévoir un unique capteur de vibrations 301, multidirectionnel, apte à mesurer des vibrations dans au moins les deux directions X et Y. Il peut notamment s'agit d'un accéléromètre.

En variante, on peut aussi prévoir un premier capteur de vibrations 301 configuré et agencé, au sein de la barre d'alésage BF, pour détecter les vibrations dans la première direction X, et un deuxième capteur de vibrations 302 configuré et agencé, au sein de la barre d'alésage BF, pour détecter les vibrations dans la deuxième direction Y. Chaque capteur 301, 302 peut alors être un accéléromètre, notamment unidirectionnel. Avantageusement, les deux capteurs 301, 302 sont alors dans un même plan XY, plan défini à une cote Z donnée le long de la barre d'alésage BF.

Comme cela est représenté schématiquement sur la figure 11, l'invention concerne également une machine-outil 400 comprenant une barre d'alésage BF conforme à l'invention, ladite barre d'alésage BF comprenant en outre, dans son logement intérieur LI, au moins un capteur de vibrations 301, 302 apte à capter les vibrations dans un plan XY perpendiculaire à l'axe longitudinal Z de la barre d'alésage BF et au moins un processeur PRO configuré pour recevoir les données issues dudit au moins un capteur de vibrations 301, 302, les traiter et commander le premier actionneur 100 et le deuxième actionneur 200 sur la base des données ainsi traitées. Tout ce qui est implémenté par le processeur est connu de l'homme du métier et n'est donc pas détaillé.

## Revendications

1. Barre d'alésage (BF) munie d'une paroi (P), d'un logement interne (LI) et d'un axe longitudinal (Z), **caractérisée en ce que** ladite barre d'alésage (BF) comporte dans son logement interne (LI) :
- un premier actionneur (100) électrodynamique comportant des bobinages (101, 102) entourant une masse mobile (110) munie d'au moins un aimant permanent (111) ainsi que, de part et d'autre de la masse mobile, au moins un ressort (120, 121) monté sur la masse mobile, l'ensemble étant agencé pour définir une première direction d'actionnement (X) perpendiculaire à l'axe longitudinal (Z) de la barre d'alésage ;
- un deuxième actionneur (200) électrodynamique muni de bobinages (201, 202) entourant une masse mobile (210) munie d'au moins un aimant permanent (211) ainsi que, de part et d'autre de la masse mobile, au moins un ressort (220, 221) monté sur la masse mobile, l'ensemble étant agencé pour définir une deuxième direction d'actionnement (Y) à la fois perpendiculaire à la première direction d'actionnement (X) et à l'axe longitudinal (Z) de la barre d'alésage.

2. Barre d'alésage (BF) selon la revendication 1, **caractérisée en ce que** le premier actionneur (100) électrodynamique et le deuxième actionneur (200) électrodynamique sont situés l'un à la suite de l'autre le long de l'axe longitudinal (Z) de la barre d'alésage.

3. Barre d'alésage (BF) selon l'une des revendications précédentes, **caractérisée en ce que** le premier actionneur (100) électrodynamique comprend un premier bobinage (101) et un deuxième bobinage (102) situé en vis-à-vis du premier bobinage (101), selon une première direction (X) perpendiculaire à l'axe longitudinal (Z) de la barre d'alésage, ledit au moins un aimant permanent (111) étant agencé entre deux couches (113, 115) faites d'un matériau magnétique doux.

4. Barre d'alésage (BF) selon la revendication précédente, **caractérisée en ce que** le premier actionneur (100) comprend un troisième bobinage (103), situé en vis-à-vis du deuxième bobinage (102) selon ladite première direction (X), et **en ce que** la masse mobile (101) est munie d'un deuxième aimant permanent (112) agencé entre deux couches (213, 217) faites d'un matériau magnétique doux.

5. Barre d'alésage (BF) selon l'une des revendications précédentes, **caractérisée en ce que** le deuxième actionneur (200) électrodynamique comprend un premier bobinage (201) et un deuxième bobinage (202) situé en vis-à-vis du premier bobinage (201), selon une deuxième direction (Y) à la fois perpendiculaire à ladite première direction (X) et à l'axe longitudinal (Z) de la barre d'alésage, ledit au moins un aimant permanent (211) étant agencé entre deux couches (213, 215) faites d'un matériau magnétique doux.

6. Barre d'alésage (BF) selon la revendication précédente, **caractérisée en ce que** le deuxième actionneur (200) comprend un troisième bobinage (203) situé en vis-à-vis du deuxième bobinage (202) selon ladite deuxième direction (Y), et **en ce que** la masse mobile (201) est munie d'un deuxième aimant permanent (212) agencé entre deux couches (213, 217) faites d'un matériau magnétique doux.

7. Barre d'alésage (BF) selon l'une des revendications précédentes, **caractérisée en ce que** la masse mobile (101, 201) et donc chaque bobinage (101, 102, 103, 201, 202, 203) présente des dimensions plus importantes selon l'axe longitudinal (Z) de la barre d'alésage (BF) que dans le plan (XY) perpendiculaire audit axe longitudinal (Z).

8. Barre d'alésage (BF) selon l'une des revendications précédentes, **caractérisée en ce que** le ou chaque actionneur électrodynamique (100, 200) comprend, de part et d'autre de la masse mobile (110, 210), une pluralité de ressorts juxtaposés selon la direction d'actionnement (X, Y) de l'actionneur considéré.

9. Barre d'alésage (BF) selon l'une des revendications précédentes, **caractérisée en ce que** le ou chaque actionneur (100, 200) comprend des plots (PG1, PG2, PG3, PG4) insérés dans les ressorts.

10. Barre d'alésage (BF) selon l'une des revendications précédentes, **caractérisée en ce que** la paroi (P) comprend, au niveau du ou de chaque actionneur (100, 200), au moins deux capots amovibles (C1, C2), sensiblement diamétralement opposés, agencés en vis-à-vis de l'un (120, 220) des ressorts (120, 121 ; 220, 221) montés sur la masse mobile (110, 210).

11. Barre d'alésage (BF) selon l'une des revendications précédentes, **caractérisée en ce que** la paroi (P) est munie d'une pluralité d'orifices (O) s'étendant selon la direction définie par l'axe longitudinal (Z) de la barre d'alésage.

12. Barre d'alésage (BF) selon l'une des revendications précédentes, **caractérisée en ce que** l'actionneur (200) situé au plus près d'un outil de coupe (OC) de la barre d'alésage (BF) présente une direction d'actionnement (DA) se confondant avec une direction radiale de vibration de l'outil de coupe (OC).

13. Barre d'alésage (BF) selon l'une des revendications précédentes, **caractérisée en ce que** la longueur cumulée, définie selon l'axe longitudinal (Z) de la barre d'alésage, du premier actionneur (100) et du deuxième actionneur (200) ne dépasse pas 30% de la longueur totale de la barre d'alésage (BF).

14. Machine-outil (400) comprenant :
- une barre d'alésage (BF) selon l'une des revendications précédentes, ladite barre d'alésage (BF) comprenant en outre, dans son logement intérieur (LI), au moins un capteur de vibrations (301, 302) apte à capter les vibrations dans un plan (XY) perpendiculaire à l'axe longitudinal (Z) de la barre d'alésage (BF),
- au moins un processeur configuré pour recevoir les données issues dudit au moins un capteur de vibrations (301, 302), les traiter et commander le premier actionneur (100) et le deuxième actionneur (200) sur la base des données ainsi traitées.

15. Machine-outil (400) selon la revendication précédente, **caractérisé en ce que** la barre d'alésage (BF) comprend, dans son logement intérieur (LI) :
- un premier capteur (301) de vibrations configuré et agencé, au sein de la barre d'alésage (BF), pour détecter les vibrations dans ladite première direction (X), et
- un deuxième capteur (302) de vibrations configuré et agencé, au sein de la barre d'alésage (BF), pour détecter les vibrations dans ladite deuxième direction (Y).

## Patentansprüche

1. Bohrstange (BF), die mit einer Wand (P), einer inneren Aufnahme (LI) und einer Längsachse (Z) ausgestattet ist, **dadurch gekennzeichnet, dass** die Bohrstange (BF) in ihrer inneren Aufnahme (LI) Folgendes umfasst:
- eine erste elektrodynamische Betätigungsvorrichtung (100), die Wicklungen (101, 102) umfasst, die eine mobile Masse (110) umgeben, die mit mindestens einem Permanentmagneten (111) ausgestattet ist, sowie, beiderseits der mobilen Masse, mindestens eine Feder (120, 121), die auf der mobilen Masse angebracht ist, wobei die Montage so eingerichtet ist, dass sie eine erste Betätigungsrichtung (X) senkrecht zur Längsachse (Z) der Bohrstange definiert;
- eine zweite elektrodynamische Betätigungsvorrichtung (200), die mit Wicklungen (201, 202) ausgestattet ist, die eine mobile Masse (210) umgeben, die mit mindestens einem Permanentmagneten (211) ausgestattet ist, sowie, beiderseits der mobilen Masse, mindestens eine Feder (220, 221), die auf der mobilen Masse angebracht ist, wobei die Montage so eingerichtet ist, dass sie eine zweite Betätigungsrichtung (Y) senkrecht zur ersten Betätigungsrichtung (X) sowie zur Längsachse (Z) der Bohrstange definiert.

2. Bohrstange (BF) nach Anspruch 1, **dadurch gekennzeichnet, dass** die erste elektrodynamische Betätigungsvorrichtung (100) und die zweite elektrodynamische Betätigungsvorrichtung (200) im Anschluss aneinander längs der Längsachse (Z) der Bohrstange gelegen sind.

3. Bohrstange (BF) nach einem der vorstehenden Ansprüche, **dadurch gekennzeichnet, dass** die erste elektrodynamische Betätigungsvorrichtung (100) eine erste Wicklung (101) und eine zweite Wicklung (102) umfasst, die der ersten Wicklung (101) in einer ersten Richtung (X) senkrecht zur Längsachse (Z) der Bohrstange gegenüberliegt, wobei der mindestens eine Permanentmagnet (111) zwischen zwei Schichten (113, 115), die aus einem weichen Magnetmaterial gefertigt sind, eingerichtet ist.

4. Bohrstange (BF) nach dem vorstehenden Anspruch, **dadurch gekennzeichnet, dass** die erste Betätigungsvorrichtung (100) eine dritte Wicklung (103) umfasst, die der zweiten Wicklung (102) in der ersten Richtung (X) gegenüberliegt, und dadurch, dass die mobile Masse (101) mit einem zweiten Permanentmagneten (112) ausgestattet ist, der zwischen zwei Schichten (213, 217), die aus einem weichen Magnetmaterial gefertigt sind, eingerichtet ist.

5. Bohrstange (BF) nach einem der vorstehenden Ansprüche, **dadurch gekennzeichnet, dass** die zweite elektrodynamische Betätigungsvorrichtung (200) eine erste Wicklung (201) und eine zweite Wicklung (202) umfasst, die der ersten Wicklung (201) entlang einer zweiten Richtung (Y) senkrecht zur ersten Richtung (X) sowie zur Längsachse (Z) der Bohrstange gegenüberliegt, wobei der mindestens eine Permanentmagnet (211) zwischen zwei Schichten (213, 215), die aus einem weichen Magnetmaterial gefertigt sind, eingerichtet ist.

6. Bohrstange (BF) nach dem vorstehenden Anspruch, **dadurch gekennzeichnet, dass** die zweite Betätigungsvorrichtung (200) eine dritte Wicklung (203) umfasst, die der zweiten Wicklung (202) entlang der zweiten Richtung (Y) gegenüberliegt, und dadurch, dass die mobile Masse (201) mit einem zweiten Permanentmagneten (212) ausgestattet ist, der zwischen zwei Schichten (213, 217), die aus einem weichen Magnetmaterial gefertigt sind, eingerichtet ist.

7. Bohrstange (BF) nach einem der vorstehenden Ansprüche, **dadurch gekennzeichnet, dass** die mobile Masse (101, 201) und somit jede Wicklung (101, 102, 103, 201, 202, 203) größere Abmessungen entlang der Längsachse (Z) der Bohrstange (BF) als in der Ebene (XY) senkrecht zur Längsachse (Z) aufweist.

8. Bohrstange (BF) nach einem der vorstehenden Ansprüche, **dadurch gekennzeichnet, dass** die oder jede elektrodynamische Betätigungsvorrichtung (100, 200) beiderseits der mobilen Masse (110, 210) eine Vielzahl von entlang der Betätigungsrichtung (X, Y) der betrachteten Betätigungsvorrichtung nebeneinanderliegenden Federn umfasst.

9. Bohrstange (BF) nach einem der vorstehenden Ansprüche, **dadurch gekennzeichnet, dass** die oder jede Betätigungsvorrichtung (100, 200) Stifte (PG1, PG2, PG3, PG4) umfasst, die in den Federn eingesetzt sind.

10. Bohrstange (BF) nach einem der vorstehenden Ansprüche, **dadurch gekennzeichnet, dass** die Wand (P) an der oder jeder Betätigungsvorrichtung (100, 200) mindestens zwei abnehmbare, im Wesentlichen diametral entgegengesetzte Abdeckungen (C1, C2) umfasst, die gegenüber einer (120, 220) der auf der mobilen Masse (110, 210) angebrachten Federn (120, 121; 220, 221) eingerichtet sind.

11. Bohrstange (BF) nach einem der vorstehenden Ansprüche, **dadurch gekennzeichnet, dass** die Wand (P) mit einer Vielzahl von Öffnungen (O) ausgestattet ist, die sich entlang der durch die Längsachse (Z) der Bohrstange definierten Richtung erstrecken.

12. Bohrstange (BF) nach einem der vorstehenden Ansprüche, **dadurch gekennzeichnet, dass** die Betätigungsvorrichtung (200), die einem Schneidwerkzeug (OC) der Bohrstange (BF) am nächsten liegt, eine Betätigungsrichtung (DA) aufweist, die mit einer radialen Schwingungsrichtung des Schneidwerkzeugs (OC) zusammenfällt.

13. Bohrstange (BF) nach einem der vorstehenden Ansprüche, **dadurch gekennzeichnet, dass** die kumulierte Länge, entlang der Längsrichtung (Z) der Bohrstange definiert, der ersten Betätigungsvorrichtung (100) und der zweiten Betätigungsvorrichtung (200) 30 % der Gesamtlänge der Bohrstange (BF) nicht überschreitet.

14. Maschinenwerkzeug (400), umfassend:
- eine Bohrstange (BF) nach einem der vorstehenden Ansprüche, wobei die Bohrstange (BF) weiter in ihrer inneren Aufnahme (LI) mindestens einen Schwingungssensor (301, 302) umfasst, der imstande ist, die Schwingungen in einer Ebene (XY) senkrecht zur Längsachse (Z) der Bohrstange (BF) zu erfassen,
- mindestens einen Prozessor, der konfiguriert ist, um die von dem mindestens einen Schwingungssensor (301, 302) stammenden Daten zu empfangen, diese zu verarbeiten und die erste Betätigungsvorrichtung (100) und die zweite Betätigungsvorrichtung (200) auf der Grundlage der auf diese Weise verarbeiteten Daten zu steuern.

15. Maschinenwerkzeug (400) nach dem vorstehenden Anspruch, **dadurch gekennzeichnet, dass** die Bohrstange (BF) in ihrer inneren Aufnahme (LI) Folgendes umfasst:
- einen ersten Schwingungssensor (301), der konfiguriert und innerhalb der Bohrstange (BF) eingerichtet ist, um die Schwingungen in der ersten Richtung (X) zu erfassen, und
- einen zweiten Schwingungssensor (302), der konfiguriert und innerhalb der Bohrstange (BF) eingerichtet ist, um die Schwingungen in der zweiten Richtung (Y) zu erfassen.

## Claims

1. A boring bar (BF) provided with a wall (P), an internal recess (LI) and a longitudinal axis (Z), **characterized in that** said boring bar (BF) comprises, in its internal recess (LI):
- a first electrodynamic actuator (100) comprising coil windings (101, 102) surrounding a moving mass (110) provided with at least one permanent magnet (111) as well as, on either side of the moving mass, at least one spring (120, 121) mounted on the moving mass, the assembly being arranged to define a first direction of actuation (X) perpendicular to the longitudinal axis (Z) of the boring bar;
- a second electrodynamic actuator (200) provided with coil windings (201, 202) surrounding a moving mass (210) provided with at least one permanent magnet (211) as well as, on either side of the moving mass, at least one spring (220, 221) mounted on the moving mass, the assembly being arranged so as to define a second direction of actuation (Y) which is both perpendicular to the first direction of actuation (X) and to the longitudinal axis (Z) of the boring bar.

2. The boring bar (BF) according to claim 1, **characterised in that** the first electrodynamic actuator (100) and the second electrodynamic actuator (200) are located one after the other along the longitudinal axis (Z) of the boring bar.

3. The boring bar (BF) according to one of the preceding claims, **characterised in that** the first electrodynamic actuator (100) comprises a first coil winding (101) and a second coil winding (102) located opposite the first coil winding (101), in a first direction (X) perpendicular to the longitudinal axis (Z) of the boring bar, said at least one permanent magnet (111) being arranged between two layers (113, 115) made of a soft magnetic material.

4. The boring bar (BF) according to the preceding claim, **characterized in that** the first actuator (100) comprises a third coil winding (103), located opposite the second coil winding (102) along said first direction (X), and **in that** the moving mass (101) is provided with a second permanent magnet (112) arranged between two layers (213, 217) made of a soft magnetic material.

5. The boring bar (BF) according to one of the preceding claims, **characterized in that** the second electrodynamic actuator (200) comprises a first coil winding (201) and a second coil winding (202) located opposite the first coil winding (201), according to a second direction (Y) both perpendicular to said first direction (X) and to the longitudinal axis (Z) of the boring bar, said at least one permanent magnet (211) being arranged between two layers (213, 215) made of a soft magnetic material.

6. The boring bar (BF) according to the preceding claim, **characterised in that** the second actuator (200) comprises a third coil winding (203) located opposite the second coil winding (202) in said second direction (Y), and **in that** the moving mass (201) is provided with a second permanent magnet (212) arranged between two layers (213, 217) made of a soft magnetic material.

7. The boring bar (BF) according to any of the preceding claims, **characterized in that** the moving mass (101, 201) and thus each coil winding (101, 102, 103, 201, 202, 203) has larger dimensions along the longitudinal axis (Z) of the boring bar (BF) than in the plane (XY) perpendicular to said longitudinal axis (Z).

8. The boring bar (BF) according to one of the preceding claims, **characterised in that** the or each electrodynamic actuator (100, 200) comprises, on either side of the moving mass (110, 210), a plurality of springs juxtaposed along the direction of actuation (X, Y) of the actuator in question.

9. The boring bar (BF) according to one of the preceding claims, **characterised in that** the or each actuator (100, 200) comprises pads (PG1, PG2, PG3, PG4) inserted in the springs.

10. The boring bar (BF) according to one of the preceding claims, **characterised in that** the wall (P) comprises, at the level of the or each actuator (100, 200), at least two removable covers (C1, C2), substantially diametrically opposed, arranged opposite one (120, 220) of the springs (120, 121; 220, 221) mounted on the moving mass (110, 210).

11. The boring bar (BF) according to one of the preceding claims, **characterised in that** the wall (P) is provided with a plurality of orifices (O) extending in the direction defined by the longitudinal axis (Z) of the boring bar.

12. The boring bar (BF) according to one of the preceding claims, **characterized in that** the actuator (200) located closest to a cutting tool (OC) of the boring bar (BF) has a direction of actuation (DA) coinciding with a radial direction of vibration of the cutting tool (OC).

13. The boring bar (BF) according to one of the preceding claims, **characterized in that** the cumulative length, defined along the longitudinal axis (Z) of the boring bar, of the first actuator (100) and the second actuator (200) does not exceed 30% of the total length of the boring bar (BF).

14. A machine tool (400) comprising:
- a boring bar (BF) according to one of the preceding claims, said boring bar (BF) further comprising, in its inner recess (LI), at least one vibration sensor (301, 302) able to sense vibrations in a plane (XY) perpendicular to the longitudinal axis (Z) of the boring bar (BF),
- at least one processor configured to receive the data from said at least one vibration sensor (301, 302), process it and control the first actuator (100) and the second actuator (200) based on the data thus processed.

15. The machine tool (400) according to the preceding claim, **characterised in that** the boring bar (BF) comprises, in its inner recess (LI):
- a first vibration sensor (301) configured and arranged, within the boring bar (BF), to detect vibrations in said first direction (X), and
- a second vibration sensor (302) configured and arranged, within the boring bar (BF), to detect vibrations in said second direction (Y).
